# EUROPEAN PATENT APPLICATION

(11) **EP 3 457 287 A1**
(43) Date of publication of application: **20.03.2019**
(21) Application number: 18194664.1
(22) Date of filing: 14.09.2018
(51) Int. Cl.: G06F 12/00

(54) **HIERARCHICAL VIRTUAL FILE SYSTEMS FOR ACCESSING DATA SETS**

(30) Priority: 15.09.2017 US 201715705591
(71) Applicant: Hewlett Packard Enterprise Development LP, Houston, TX 77070 (US)
(72) Inventor: JOHNSON, Charles Stuart, Palo Alto, CA California 94304-1112 (US); KUNO, Harumi, Palto Alto, CA California 94304-1100 (US); PARK, Stan, Palo Alto, CA California 94304-1100 (US); GUY, Wey Yuan, Redmond WA 98052 (US); CHABBI, Milind M, Palo Alto, CA California 94304-1112 (US); BREDENBERG, Jacqueline, Palo Alto, CA California 94304-1100 (US); SCHERER, William N, Houston, CA California 77070 (US); BYRNE, John L, Pasadena, CA California 91105 (US); TUCEK, Joseph, Palo Alto, CA California 94304-1100 (US); FELDMAN, Dan, Palo Alto, CA California 94304-1100 (US)
(74) Representative: Haseltine Lake LLP

(57) **Abstract**

Examples disclosed herein relate to a hierarchical file system. The hierarchical file system may include a first and a second virtual file referencing a stored data set. The first virtual file may include a set of first keys of a first level of specificity, with each key of the set of first keys including a record locator. The second virtual file may include a set of second keys referencing the data set and of a second level of specificity. The set of first keys within the first virtual file is searched in response to a query for data of the data set. A key from the set of second keys is accessed via the record locator from a key from the set of first keys where the data of the data set was not identified by the set of first keys.

## Description

### BACKGROUND

Data may be stored in computer memory, and may include input data sets, processed intermediate results, and/or final processed results. Subsequent processing of the stored data may include moving the data within or between various memories. In large memory pools, the cost of moving data may be great. Data stored locally may be accessed with lower latencies than remotely stored data. For example, data stored in local Dynamic Random Access Memory (DRAM) may be accessed faster than data residing on remote memory.

Memory management hardware may utilize a memory cache known as a translation lookaside buffer (TLB) to improve virtual address translation speeds. The TLB may store translations of virtual memory to physical memory. If a requested address to data is stored within the TLB, a match may occur and the physical address to access memory may be retrieved from the TLB. Conversely, where the requested address is not stored within the TLB, a TLB miss may occur and the contents of multiple memory locations may be read to compute the physical address. A TLB hit may result in faster access to data than a TLB miss.

In large memory pools, data may be physically distributed across regions of memory. The greater the distribution of data across memory, the greater the frequency at which TLB misses may occur.

### BRIEF DESCRIPTION OF THE DRAWINGS

Certain examples are described in the following detailed description and in reference to the drawings, in which:
FIG. 1 is a block diagram of an example hierarchical virtual file system having keys of varying levels of specificity.
FIG. 2 is a block diagram of another example hierarchical virtual file system having keys of varying levels of specificity.
FIG. 3 is a flowchart illustrating an example method for searching for data within a hierarchical virtual file system.
FIG. 4 is a flowchart illustrating another example method for searching for data within a hierarchical virtual file system.
FIG. 5 is a block diagram of an example non-transitory computer readable medium for identifying keys of a virtual file within a hierarchical virtual file system.
FIG. 6 is a block diagram of an example non-transitory computer readable medium for processing data using a hierarchical virtual file system.
FIG. 7 is a block diagram of an example data mover for moving data between physical files referenced by a hierarchical file system.

### DETAILED DESCRIPTION OF SPECIFIC EXAMPLES

Systems, methods, and equivalents for accessing data within a hierarchical file system are provided.

Specifically, a hierarchical system of virtual files each having a set of reference keys is implemented such that data records are stored in files as keys of varying degrees of specificity. A key set may be an index to a data set, *i.e.* the index may include summary data of a data set in addition to reference locations to data of the data set. A first key set may be abstracted from a second key set such that each key of the first key set includes a truncated portion of the key included in the second key set. Truncated key sets may be of lesser degree of specificity than a larger key set such that a truncated key set contains less data than a larger key set. Thus truncated key sets may be less computationally expensive (e.g., to store, look up, move within memory, etc.).

As an additional example, a first key set may be abstracted from a second key set such that each key of the first key set includes a compressed version of the key included in the second key set. Thus, compressed key sets may be of lesser degree of specificity than an uncompressed key set. Conversely, key sets having data of greater specificity, *e.g*. having a longer key and/or an uncompressed key, may contain more data, but may utilize a greater number of computational resources.

By utilizing a hierarchical virtual file system, *i.e.,* a hierarchy of indexes, a virtual file having a set of keys of lesser specificity may be stored within a TLB. Each key of the set of keys of lesser specificity may include a record locator. Each record locator may include a reference to a virtual file having a set of keys of greater specificity, and may additionally include an offset into the virtual file having the set of keys of greater specificity. The offset may identify a target key having additional data and/or may identify a subset of keys having additional data. Thus, where the virtual file having a set of keys of lesser specificity provides insufficient data, the set of keys of greater specificity may be accessed via a record locator from the set of keys of lesser specificity.

As an additional example, the record locator from the set of first keys identifies the subset of keys from the set of second keys by a filterable criterion. For instance, the set of first keys may include a reference to a virtual file having a set of keys of greater specificity in addition to a criterion with which to filter the set of keys of greater specificity. The filterable criterion may be a data category, data type, key length, etc.

Any number of tiers of virtual files including hierarchical keys of varying degrees of specificity may be utilized. Thus, where the virtual file having the set of keys of greater specificity provides insufficient data, a set of keys of even greater specificity may be accessed through a record locator from the previously searched virtual file. In an example, the lowest tier, *i.e.* the virtual file having a set of keys of greatest specificity, may point to the data records themselves, *i.e.* a data payload, instead of, or in addition to, a different virtual file. Implementing a hierarchical key system enables a more comprehensive mapping of keys to data to be stored in a TLB while still providing pathways to keys of greater specificity.

A virtual file system may be a logical data layer on top of a physical file system that provides access to files independent of how the underlying file is physically stored. For example, an application may access a stored data set through a virtual file of a virtual file system, and the virtual file will appear to the application as though it was accessing the stored data directly. However, the virtual file may present the stored data set in a different order, filter the contents of the stored data set, etc.

Reference will now be made to the accompanying drawings. Wherever possible, the same reference numbers are used in the drawings and the following description to refer to the same or similar parts. It is to be expressly understood, however, that the drawings are for the purpose of illustration and description only. While several examples are described in this document, modifications, adaptations, and other implementations are possible. Accordingly, the following detailed description does not limit the disclosed examples. Instead, the proper scope of the disclosed examples may be defined by the appended claims.

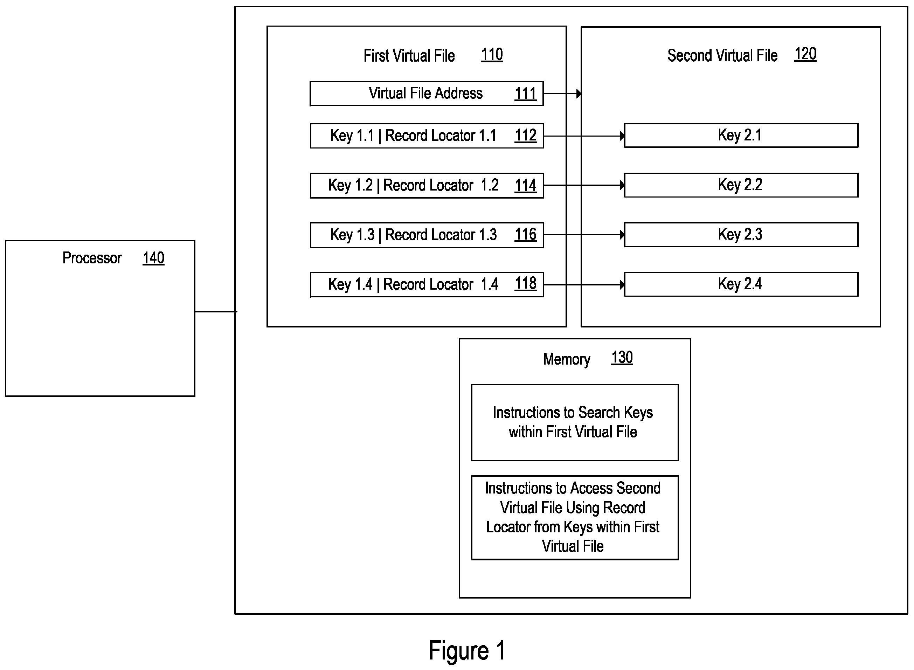

FIG. 1 is a block diagram of an example hierarchical virtual file system 100 for accessing and/or processing stored data. System 100 may include any number of virtual files. In this example, two example virtual files are provided, first virtual file 110 and second virtual file 120 respectively. The virtual files may reference a stored data set such that the first virtual file and second virtual file may include direct and/or indirect access information to the data set. First virtual file 110 for example, may include direct access information to the data set such that first virtual file 110 provides access information to the physical location/s at which the data set is stored. In another example, first virtual file 110 may indirectly reference the stored data set by providing access information to virtual file 120, which may provide access information to the physical location/s at which the data set is stored.

First virtual file 110 may include a set of first keys, 112-118 respectively, of a first level of specificity and virtual file 120 may include a set of second keys, 122-128 respectively, of a second level of specificity. Specifically, keys 112-118 may include information about the stored data set, and keys 122-128 may include information about the stored data set different from the information included in keys 112-118. As an example, keys 112-118 may be of a first length and keys 122-128 may be of a second length. Keys 112-118 may include overlapping information with keys 122-128, and/or disjointed information from keys 122-128. For example, in the case of overlapping keys, each key of the set of first keys, 112-118 respectively, may include the first X bytes of a truncated key and each key of the set of second keys, 122-128 respectively, may include the first Y bytes of a truncated key, where Y is an integer greater than X. In the case of disjointed keys, each key of the set of first keys, 112-118 respectively, may include the first X bytes of a truncated key and each key of the set of second keys, 122-128 respectively, may include the next Y bytes of the truncated key. Thus, there may or may not be overlap between the information provided by the set of first keys and the set of second keys.

In addition to a plurality of virtual files having key sets of varying levels of specificity, system 100 may include a memory 130 having instructions to be executed by a processor, e.g. processor 140, to access and/or process stored data via the hierarchical virtual files. In the example provided, memory 130 may include instructions 132 to search the set of first keys within the first virtual file. Specifically, in response to a query for data within a data set referenced by the first virtual file, instructions 132 may search the set of first keys for the queried data. Where the queried data is identified by at least one of keys 112-118, the identified data may be returned.

Instructions 134 may be provided to access a key from the set of second keys where the data of the data set was not identified by the set of first keys. In an example, first virtual file 110 may include a second virtual file address 111 to provide access information to the second virtual file having a set of second keys. The set of second keys may provide additional information or information otherwise not provided in the set of first keys. A record locator may be included with each key of the first set such that keys of the first set may identify keys of the second set providing additional information. Thus, instructions 134, when executed, may access a key, *e.g*. a key identified as a potential reference to the queried data, from the set of second keys via a record locator of a key from the set of first keys. In an example, the queried data may be identified from a key of the set of second keys. Accordingly, second virtual file address 111 may provide access to second virtual file 120, and a record locator of a key of the set of first keys may provide access to a key of the set of second keys from second virtual file 120.

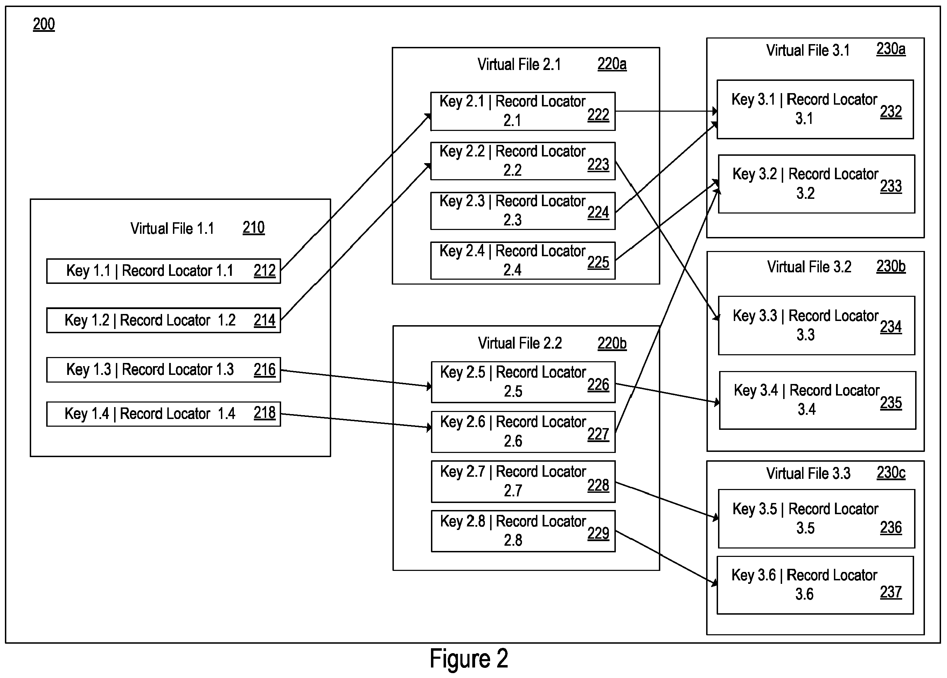

As discussed above, any number of virtual files may be implemented within the hierarchical virtual file system. FIG. 2 is a block diagram illustrating an example hierarchical virtual file system 200. Example system 200 includes a first virtual file 210 of a first tier having a set of first keys. Example system 200 may also include a second tier of virtual files, including virtual file 220a and virtual file 220b, as well as a third tier of virtual files, including virtual files 230a, 230b, and 230c. While three such tiers of virtual files are illustrated in this example, for purposes of clarity and conciseness, any number of virtual files may be implemented. In an example, virtual files in lower tiers may include key sets of a higher degree of specificity than virtual files in higher tiers. For example, a first-tier file may contain truncated keys having a select number of bytes. A second-tier file may contain full keys, and a third-tier file may contain data records accessible by the keys of the first-tier file and/or the second-tier file.

In a further example, virtual files in different tiers may contain different types of data. As an illustrative example, the tiered virtual files may contain data that together represents the contents of a reference log, *e.g*. an encyclopedia, a phone book, etc. A first virtual file of a first tier, *e.g*. first virtual file 210, may contain keys that include the first word of the first entry on each page of the reference log, and/or the last word of the last entry on each page, together with a run-length encoding indicating the number of entries per page. A second virtual file of a second tier, *e.g*. virtual file 220a or virtual file 220b, may contain keys having data including a list of the titles of each entry on each page in the reference log. A third virtual file of a third tier, *e.g*. virtual file 230a, 230b, or 230c, may contain keys having data including a complete set of the entries included on a page of the reference log.

As an additional illustrative example, a first tier of virtual files, e.g. first virtual file 210, may contain keys including data entries such that each key contains an entry organized alphabetically. Conversely, a second tier of virtual files may contain keys including data entries such that each key contains an entry organized categorically, *e.g*. second virtual 220a may contain keys including data of a first category and second virtual 220b may contain keys including data of a second category.

Each virtual file may include data records in the form of a set of access keys for accessing a data set payload. FIG. 2 illustrates an example in which example virtual file 210 includes example keys 212-218, example virtual file 220a includes example keys 222-225, example virtual file 220b includes example keys 226-229, example virtual file 230a includes example keys 232-233, example virtual file 230b includes example keys 234-235, and example virtual file 230c includes example keys 236-237. Furthermore, each key of the key set may include a record locator. In an example, a record locator may include an address to a different virtual file. Key 212 for example, may include a record locator 1.1 for accessing virtual file 220a. In addition to identifying a virtual file, a record locator may additionally identify a specific key, or a specific subset of keys of a different virtual file. As illustrated in FIG. 2, the record locator of key 212 may provide access to key 222 of virtual file 220a. In an example, record locator of key 212 may include an address to virtual file 220 and/or an offset into virtual file 220a, the offset identifying key 222 as the target in this case. As an added example, record locator of key 222 may include an address to virtual file 230a and/or an offset into virtual file 230a, the offset identifying key 232. Thus, record locators may identify keys in different virtual files.

In an example, a record locator may include a pointer to the location/s of the data payload. For example, each tier of the hierarchy of keys may include keys of varying degrees of specificity. Where a key of lesser specificity does not satisfy the data query, a key of greater specificity may be accessed using a record locator of a key from a tier of lesser specificity. This process may continue until a tier of greatest specificity is accessed and/or the requested data is located. The tier of greatest specificity may include keys having pointers to the location of the physical data such that, where the query is not satisfied-i.e. the data is not located-by the tier of greatest specificity, the query may be satisfied by accessing the data payload itself.

Once the data is located, a virtual file may be materialized from the located data such that future queries for like data may be accessed from the materialized virtual file. In an example, the virtual file may be materialized such that the located data, which may be distributed across memory, is physically co-located. For instance, the located data may be stored in volatile memory and/or stored locally for efficient access. The virtual file may be materialized such that results of a file access operation may be stored as a physical file and updated periodically to reflect changes to the underlying data.

A virtual file may store references to data and may utilize less memory than the data itself. However, accessing data through a virtual file may take longer than accessing the data directly. A materialized virtual file may store a copy of the located data, e.g. in a higher-more expensive storage tier, such that the data may be retrieved at a faster access time. In an example, the contents stored by the materialized virtual file may be periodically updated, or updated upon a detected change in the underlying stored data content. Thus, in an example, virtual files may store the data that is called by recently executed computational workloads.

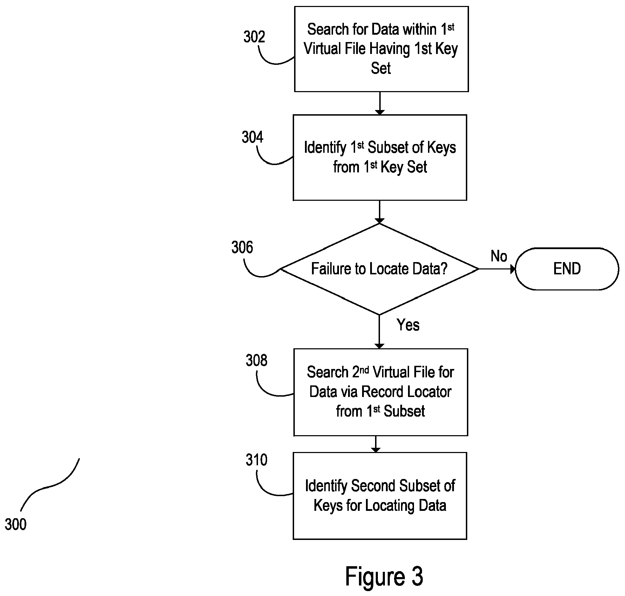

FIG. 3 is a flowchart illustrating an example method 300 for searching for data within a hierarchical virtual file system. Method 300 may be executed or performed, for example, by some or all of the system components described above in system 100 of FIG. 1 and/or system 200 of FIG. 2. Method 300 may be implemented in the form of executable instructions stored on at least one machine-readable storage medium of a system and executed by at least one processor of the system. Alternatively or in addition, method 300 may be implemented in the form of electronic circuitry, e.g. hardware. In some examples, steps of method 300 may be executed substantially concurrently or in a different order than shown in FIG. 3. In some examples, method 300 may include more or less steps than are shown in FIG. 3. In some examples, some of the steps of method 300 may, at certain times, be ongoing and/or may repeat.

A request for access to stored data of a dataset may be received by a database. The requested data may be searched for within a hierarchical file system, e.g. systems 100 or 200 of FIGs. 1 and 2. In an example, the hierarchical file system may include any number of virtual files, *i.e.* indexes, having keys of varying level of specificity for accessing the dataset. For instance, the file system may include a first virtual file referencing the data set, e.g. first virtual file 110 of FIG. 1 or first virtual file 210 of FIG. 2, and/or a second virtual file referencing the data set, *e.g*. second virtual file 120 of FIG. 1 or second virtual file 220a or 220b of FIG. 2.

As mentioned above, the requested data may be searched for within the hierarchical file system. At block 302, the data may be searched for within a first virtual file. The first virtual file may include a set of first keys of a first level of specificity, *e.g*. keys 112-118 of first virtual file 110 illustrated in FIG. 1 or keys 212-218 of first virtual file 210 illustrated in FIG. 2. In an example, the set of first keys may have a lowest level of specificity. For example, keys of the set of first keys may be shorter abstracts of longer keys represented in other key sets.

At block 304, a first subset of keys that match a criterion may be identified from the first key set, *e.g*. keys that include some combination of letter and/or number, keys that are of a particular length, keys that reference particular content, etc. At least a key of the first subset of keys may specifically reference, directly or indirectly, the requested data of the dataset. The key of the first subset of keys may directly reference the requested data of the dataset such that a record locator of the key may point to the physical location/s of the requested data. Conversely, the first subset of keys may indirectly reference the requested data of the dataset such that the record locator of the key may point to a different virtual file that references the requested data of the dataset directly or indirectly. The first subset of keys may include any number of keys, and may for instance, include a single key.

It may be determined at block 306 whether the requested data may be located within the set of first keys, and specifically, within the identified first subset of keys. Where the data is located within the first subset of keys, the requested data may be returned, and the process may be terminated as illustrated in FIG. 3. Where a failure to locate the data within the set of first keys occurs, a set of second keys of a second virtual file may be searched, *e.g*. keys 122-128 of second virtual file 120 illustrated in FIG. 1, keys 222-225 of second virtual file 220a illustrated in FIG. 2, or keys 226-229 of second virtual file 220b illustrated in FIG. 2. Specifically, a record locator of a key of the first subset of keys may provide access to a second virtual file.

In an example, each virtual file directly referenced by the record locators of the first subset of keys may be accessed and searched. For instance, keys 212-218 of first virtual file 210 illustrated in FIG. 2 directly reference both second virtual file 220a and second virtual file 220b in that keys 212 and 214 directly reference second virtual file 220a and keys 216 and 218 directly reference second virtual file 220b. Where the first subset of keys includes a key referencing second virtual file 220a and a key referencing second virtual file 220b, both second virtual file 220a and virtual file 220b may be searched.

At block 308, the requested data may be searched for within the second virtual file. In an example, the second virtual file may be accessed via a record locator from the first subset of keys. The second subset of keys may be of a different level of specificity than the first subset of keys, and, in an example, may include keys of a greater level of specificity than the first subset of keys.

At block 310, a second subset of keys of a set of second keys from a second virtual file may be identified for locating the requested data. In an example, the second subset of keys may be identified by accessing the second virtual file and identifying keys of the second set that match a criterion. In an example, the record locator from the first subset of keys may identify the second subset of keys by an offset into the second virtual file. Thus, a second subset of keys of a different level of specificity than the first subset of keys may be identified for locating the requested data where the requested data was not found within the first subset of keys.

Like the first subset of keys, the second subset of keys may include direct and/or indirect references to the requested data of the stored data set. The second subset of keys may include a direct reference to the requested data where the second subset of keys includes a pointer to a physical location of the requested data. The second subset of keys may include an indirect reference to the requested data where the second subset of keys includes a record locator to a third virtual file having a set of third keys, *e.g*. third virtual file 230a, third virtual file 230b, or third virtual file 230c. Where the requested data is not located within the subset of second keys, a third key from the set of third keys may be identified via a record locator from a key of the second subset of keys. The third key may contain the requested data, and/or may directly or indirectly reference the location of the requested data.

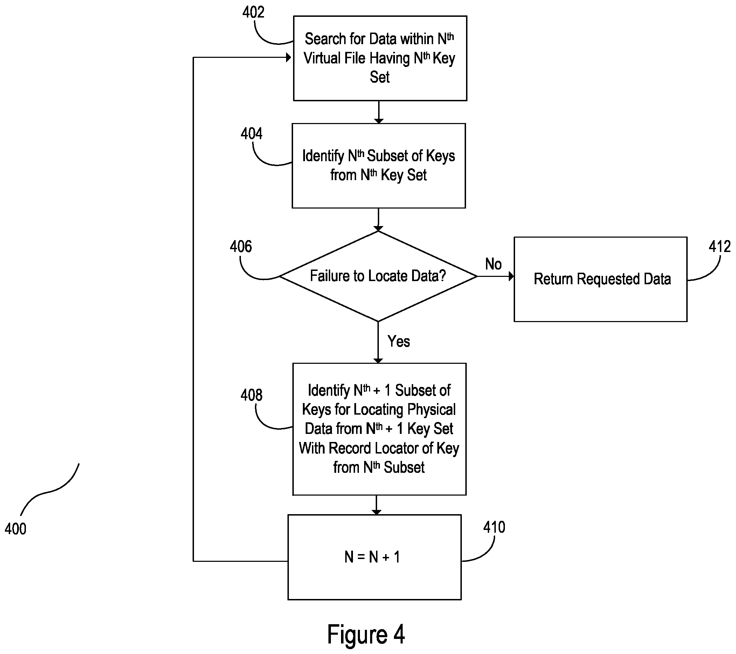

FIG. 4 is a flowchart illustrating another example method 400 for searching for data within a hierarchical virtual file system. Method 400 may be executed or performed, for example, by some or all of the system components described above in system 100 of FIG. 1 and/or system 200 of FIG. 2. Method 400 may be implemented in the form of executable instructions stored on at least one machine-readable storage medium of a system and executed by at least one processor of the system. Alternatively or in addition, method 400 may be implemented in the form of electronic circuitry, e.g. hardware. In some examples, steps of method 400 may be executed substantially concurrently or in a different order than shown in FIG. 4. In some examples, method 400 may include more or less steps than are shown in FIG. 4. In some examples, some of the steps of method 400 may, at certain times, be ongoing and/or may repeat.

FIG. 4 illustrates how any number of virtual files of any number of tiers may be utilized for locating stored data. Like at block 302 of FIG. 3, at block 402 data may be searched within a virtual file having a key set. A subset of the keyset may be identified at block 404, and, at block 406 it may be determined whether the requested data was located within the set of first keys. A determination that the requested data was located may lead to a return of the requested data at block 412. A determination that the requested data was not located may lead to identifying a subset of keys at block 408 for locating the physical data that is of a lower tier than the subset of keys. Accordingly, any number of virtual files of any number of tiers may be implemented for locating the requested data.

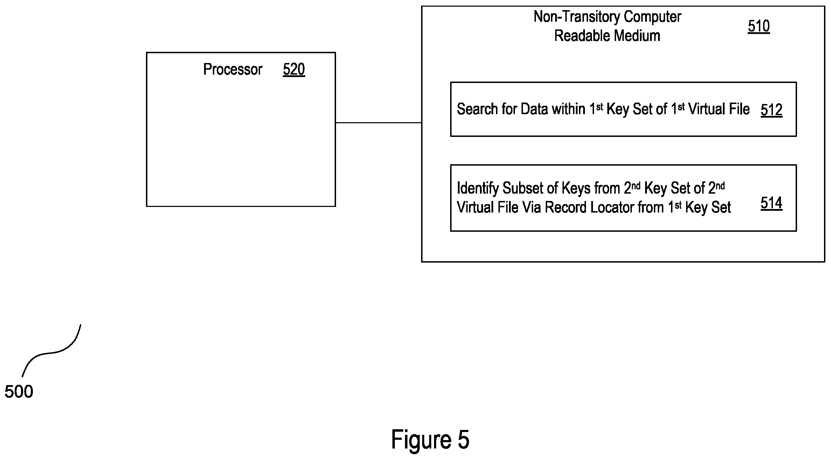

FIG. 5 is a block diagram 500 depicting an example non-transitory computer readable medium 510 for identifying keys of a virtual file within a hierarchical virtual file system. Non-transitory computer readable medium 510 may be coupled to a processor, *e.g*. processor 520, and may include executable instructions thereon. In response to a request for data, instructions 512 may be executed, and may cause processor 520 to search for data within a hierarchical file system, *e.g*. hierarchical file system 100 of FIG. 1 or hierarchical file system 200 of FIG. 2. In response to a failure to locate the requested data from a set of first keys of the hierarchical file system, *e.g*. keys 112-118 of FIG. 1 or keys 212-218 of FIG. 2, instructions 514 may identify a subset of keys from a set of second keys of the hierarchical file system, *e.g*. keys 122-128 of FIG. 1, keys 222-225 of FIG. 2, or keys 226-229 of FIG. 2, via a record locator from a key of the set of first keys.

In an example, a record locator of a key from the set of second keys may directly reference the requested data of the stored data set in that the record locator of the key may include a pointer to a location of the requested data. Thus, the requested data may be accessed from the record locator of the key from the set of second keys. Conversely, a record locator of a key from the set of second keys may indirectly reference the requested data in that the record locator of the key may include a record locator to a third virtual file having a set of third keys. For example, the record locator of the key may include a record locator to third virtual file 230a, third virtual file 230b, or third virtual file 230c of FIG. 2, having keys 232-233, keys 234-235, or keys 236-237, respectively.

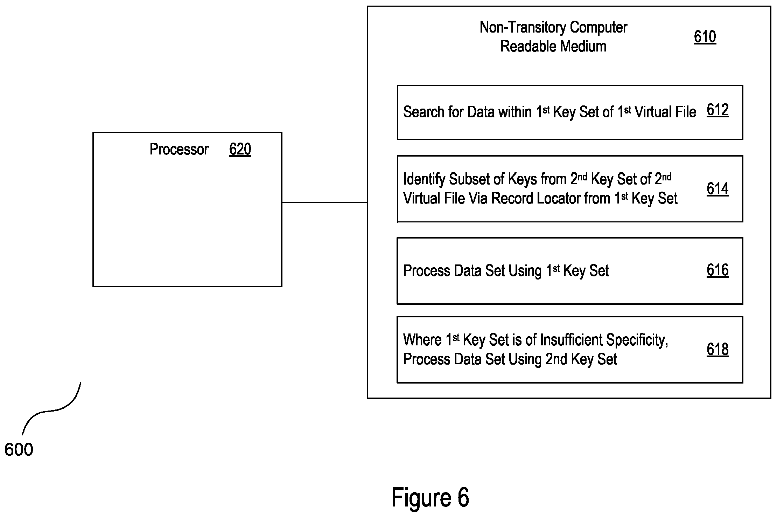

FIG. 6 is a block diagram 600 depicting an example non-transitory computer readable medium 610 for identifying keys of a virtual file within a hierarchical virtual file system. Non-transitory computer readable medium 610 may be coupled to a processor, *e.g*. processor 620, and may include executable instructions thereon. In response to a request for data, instructions 612 may be executed, and may cause processor 620 to search for data within a hierarchical file system, *e.g*. hierarchical file system 100 of FIG. 1 or hierarchical file system 200 of FIG. 2. In response to a failure to locate the requested data from a set of first keys of the hierarchical file system, *e.g*. keys 112-118 of FIG. 1 or keys 212-218 of FIG. 2, instructions 614 may identify a subset of keys from a set of second keys of the hierarchical file system, *e.g.* keys 122-128 of FIG. 1, keys 222-225 of FIG. 2, or keys 226-229 of FIG. 2, via a record locator from a key of the set of first keys.

Instructions 616 may be provided to process the data set using the set of first keys of the first virtual file. For example, each key of the set of first keys may reference a portion of the data set such that the data set may be range partitioned by the set of first keys. Specifically, the data set may be processed by producing sorted range-partitioned output files using the set of first keys. Each partition of the data set may be assigned to a different thread for processing.

Instructions 618 may be provided to process the data set using the set of second keys where the set of first keys are of insufficient specificity. For example, the set of first keys may range-partition the data set but may not be of sufficient specificity to sort the range-partitioned data. The set of second keys may be of a higher level of specificity such that the set of second keys may further sort the partitioned data. In another example, the set of second keys may be of a higher level of specificity such that the set of second keys may filter the partitioned data based on a criterion, read and/or write data to comply with a read and/or write request, rearrange the partitioned data within memory, etc. Accordingly, the set of first keys of a first level of specificity may process the data set and the set of second keys of a second level of specificity may further process the data where the set of first keys were of insufficient specificity to fully process the data set.

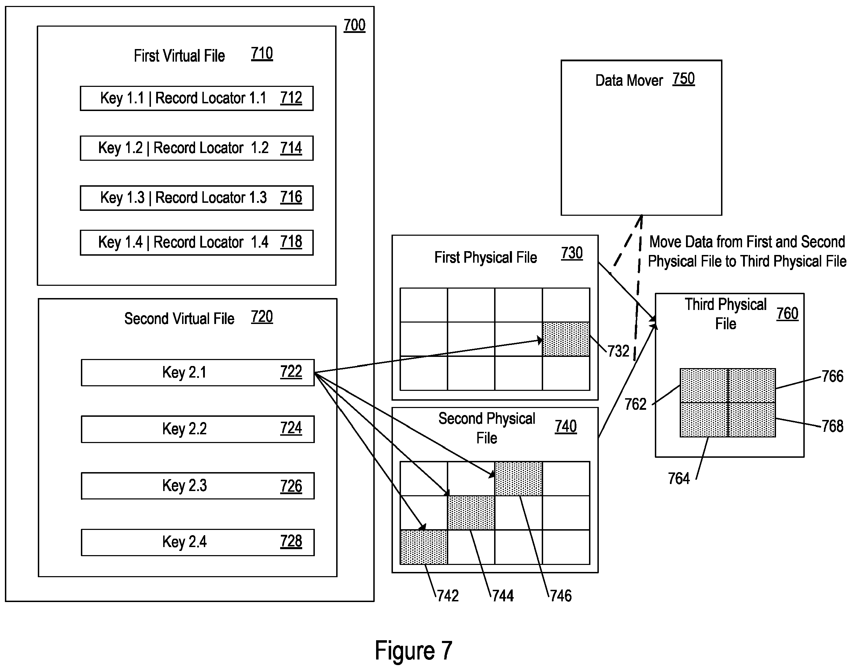

FIG. 7 is a block diagram illustrating a data mover 750 for moving data between physical files referenced by a hierarchical file system. A data mover, such as a memory-side accelerator for example, may be utilized to decrease the time to access content referenced by a virtual file. An example of a memory-side accelerator may include a data mover to bypass a central processing unit (CPU) and move data from a first physical file to a second physical file. In an example, the data mover may retrieve data referenced by the virtual file and collocate the retrieved data. In an example, the data mover may automatically retrieve and collocate the data referenced by the physical file in response to a data request.

A data mover may move data from any number of physical files to any number of other physical files for purposes of collocation. In this example, data mover 750 is illustrated as moving data from first physical file 730 and second physical file 740, to third physical file 760. First physical file 730 and second physical file 740 may be referenced by a hierarchical file system 700 having a first virtual file 710 and a second virtual file 720. First virtual file 710 may include a set of first keys, 712-718 respectively, and second virtual file 720 may include a set of second keys, 722-728 respectively.

In this example, second virtual file 720, and specifically key 722 of second virtual file 720, may reference data distributed between memory regions of first physical file 730 and second physical file 740. Although second virtual file 720 references data distributed between memory regions of two physical files, referenced data may be distributed between memory regions of any number of physical files. A memory region may include any data storage medium, including, for example, dynamic random access memory (DRAM), disks, memory cards accessed via a memory card reader, etc. In this example, memory region 732 of first physical file 730 may be referenced by key 722, as well as memory region 742, 744, and 746 of second physical file 740.

Data mover 750 may move data referenced by key 722 from first physical file 730 and second physical file 740 to third physical file 760. The moved data may be stored in any number of memory regions, and, in this example, may be stored in memory regions 762, 764, 766, and 768. Thus, data mover 750 may consolidate data referenced by a hierarchical file system within a physical file.

It is appreciated that the previous description of the disclosed examples is provided to enable any person skilled in the art to make or use the present disclosure. Various modifications to these examples will be readily apparent to those skilled in the art, and the generic principles defined herein may be applied to other examples without departing from the spirit or scope of the disclosure. Thus, the present disclosure is not intended to be limited to the examples shown herein but is to be accorded the widest scope consistent with the principles and novel features disclosed herein.

## Claims

1. A hierarchical virtual file system comprising:
a first virtual file of a hierarchical file system, the first virtual file including a set of first keys referencing a data set and of a first level of specificity, wherein each key of the set of first keys includes a record locator;
a second virtual file of the hierarchical file system, the second virtual file including a set of second keys referencing the data set and of a second level of specificity; and
a memory including instructions to be executed by a processor, the instructions when executed causing the processor to:
search the set of first keys within the first virtual file in response to a query for data of the data set; and
access a key from the set of second keys via the record locator from a key from the set of first keys where the data of the data set was not identified by the set of first keys.

2. The file system of claim 1, wherein the first level of specificity is of lesser degree of specificity than the second level of specificity.

3. The file system of claim 1, wherein a record locator of the set of first keys (i) includes an address to the set of second keys or (ii) identifies a subset of the set of second keys.

4. The file system of claim 1, wherein a record locator from the set of first keys identifies a key from the set of second keys and, optionally, wherein the record locator from the set of first keys identifies the key from the set of second keys by an offset into the second virtual file.

5. The file system of claim 1, further comprising a third virtual file of the hierarchical file system, the third virtual file including a set of third keys referencing the data set and of a third level of specificity and, optionally, wherein each key of the set of second keys includes a record locator, and further comprising the instructions to:
search the set of second keys within the second virtual file system for the data; and
access the third virtual file system via the record locator from the set of second keys where the data within the data set was not identified from the set of second keys.

6. The file system of claim 1, wherein each key of the set of second keys includes a record locator to access a payload of the dataset.

7. The file system of claim 1, further comprising instructions when executed to cause the processor to:
process the data set using the set of first keys of the first virtual file; and
process the data set using the set of second keys where the set of first keys are of insufficient specificity for processing.

8. The file system of claim 1, further comprising instructions when executed to cause the processor to materialize a virtual file from the first and second virtual file.

9. A method for locating physical data from a data set, the method to be executed by a processor and comprising:
responsive to a request for data, searching for the data within a hierarchical file system including a first virtual file referencing the data set and a second virtual file referencing the data set, wherein the searching comprises:
searching within the first virtual file for the requested data, wherein the first virtual file includes a set of first keys of a first level of specificity and the second virtual file includes a set of second keys of a second level of specificity;
identifying a first subset of keys from the set of first keys that match a criterion; and
responsive to a failure to locate the requested data within the set of first keys,
searching within the second virtual file for the requested data via a record locator from a key of the subset of first keys; and
identifying a second subset of keys for locating the requested data from the set of second keys.

10. The method of claim 9, wherein a key from the identified second subset of keys includes a pointer to a physical location of the requested data.

11. The method of claim 9, wherein a key from the identified second subset of keys includes a record locator to a third virtual file having a set of third keys the method optionally further comprising identifying a key from the set of third keys via the record locator from the key of the subset of second keys responsive to a failure to locate the data within the subset of second keys.

12. A non-transitory machine-readable storage medium comprising instructions for accessing physical data from a data set, the instructions executable by a processor to:
responsive to a request for data, search for the data within a hierarchical file system including a first virtual file referencing the data set and a second virtual file referencing the data set, the search comprising:
searching within the first virtual file, wherein the first virtual file includes a set of first keys of a first level of specificity and the second virtual file includes a set of second keys of a second level of specificity different than the first level of specificity; and
responsive to a failure to locate the data within the set of first keys, identifying a subset of keys from the set of second keys included in the second virtual file via a record locator from a key of the set of first keys.

13. The non-transitory machine-readable storage medium of claim 12, wherein a record locator from the set of first keys identifies the subset of keys from the set of second keys by a filterable criterion and/or wherein a record locator of a key from the identified subset of keys includes a pointer to a location of the requested data.

14. The non-transitory machine-readable storage medium of claim 12, further comprising instructions when executed to cause the processor to:
process the data set using the set of first keys of the first virtual file; and
process the data set using the set of second keys where the set of first keys are of insufficient specificity.

15. The non-transitory machine-readable storage medium of claim 12, wherein the first virtual file includes a virtual file address to locate the second virtual file.
